# EUROPEAN PATENT APPLICATION

(11) **EP 4 831 866 A1**
(43) Date of publication of application: **28.10.2026**
(21) Application number: 23848700.3
(22) Date of filing: 21.12.2023
(51) Int. Cl.: G06K 19/04, G06K 19/077

(54) **ENCAPSULATION COMPRISING A TRANSPONDER, CONSTRUCTION ELEMENT COMPRISING THE ENCAPSULATION, AND METHOD FOR MOUNTING THE ENCAPSULATION IN A CONSTRUCTION ELEMENT**

(71) Applicant: Encofrados J. Alsina, S.A., 08110 Montcada i Reixac (ES)
(72) Inventor: ARDILA LOPEZ, Germán, 08110 MONTCADA I REIXAC (BARCELONA) (ES)
(74) Representative: Sugrañes, S.L.P.
(86) International application number: PCT/ES2023/070773
(87) International publication number: WO 2025/133414

(57) **Abstract**

The invention relates to an encapsulation with a transponder, a construction element comprising the encapsulation and a method for assembling the encapsulation in a construction element. The encapsulation (1) comprises an oblong body formed by two flat end parts (11, 13), provided with respective through fixing holes (16), and by a flat central part (12), and a transponder arranged inside the oblong body. The central part (12) has a thickness greater than the thickness of the end parts and whereby the central part has a flat protruding surface (14) protruding with respect to the end parts. Gripping means in the form of an appendage (15) extending beyond the protruding surface are arranged in the central part. The construction element comprises an oblong opening (24) through which the encapsulation is assembled in a hollow profile of the element.

## Description

### Technical field of the invention

The present invention relates to an encapsulation inside which a transponder of an RFID system is arranged. The encapsulation object of the invention comprises an oblong body formed by two flat end parts, provided with respective through holes for fixing the encapsulation to an element or structure which the transponder has or may have information about, and by a flat central part.

A second aspect of the invention relates to a construction element comprising at least one hollow profile with at least one outer side the outer face of which is oriented towards the outside of the construction element and the inner face of which is oriented towards the cavity of the hollow profile. Examples of construction elements are formwork panels and props.

According to a third aspect, the invention relates to a method for assembling the encapsulation of the invention in a construction element of the type indicated above.

### Background of the invention

The application of radio-frequency identification technology, known by the acronym RFID for "radio-frequency identification", has become essential in activities involving large movements of goods, as it allows the unequivocal identification and traceability of products in a supply chain, by means of transponders of the RFID system, being possible to track, identify and locate the product quickly and automatically at all times without having to get too close to the product.

Remote data storage and retrieval is carried out by means of devices called RFID tags, cards or transponders in which digital data associated with the product carrying said device has been encoded, and by RFID readers that capture said data through radio waves. RFID tags or transponders are small sticker-like devices that can be attached to or incorporated into the product being tracked and contain antennas to allow them to receive and respond to radio-frequency requests from an RFID emitter-receiver.

Another common term in RFID technology is the RFID inlay, which is made up of an antenna with reduced dimensions and a small chip attached thereto, in which the chip is a memory in which small fragments of information can be stored. Moreover, the inlay antenna captures and uses the energy emitted by an external RFID reader to activate the operation of the chip for a short period of time so that it can send the information contained in its memory to the reader. Reading distances vary greatly depending on the RFID system used, the type of inlay and the operating frequency.

Given the performance of RFID technology, it is not surprising that its use has also been implemented in processes related to the rental of construction elements and their inventory such as, for example, scaffolding posts, props and formwork panels, to improve the control of assets, the maintenance to which they must be subjected and to increase the reliability of the information it entails. To that end, various ways have been developed for placing on construction elements an RFID tag or transponder which contains in its memory information about the element in question and can be consulted by an operator provided with a gun-shaped RFID reader, pointing towards the construction element from a distance.

For example, Taiwanese utility model document TWM435489 U describes a system for placing an RFID tag on a scaffolding post, wherein the RFID tag is placed between the outer surface of the post and a cap that is subsequently screwed for fixing thereof to the post.

In the case of the formwork panel rental process, this comprises several stages, such as the selection of panels for preparing customer's order, in which the panels are validated by reading the transponders, and delivery thereof by the supplier to the work site, and once the formwork removal work has been completed, their shipment to and reception at the facilities of the supplier which will identify them by means of reading and classify them according to their condition, determining if they are in good condition and can be stored directly, if it is necessary to repair them before storing them, or if they are severely damaged and should be discarded.

Patent document ES2372122 T3 discloses a formwork panel provided with several metal webs which are part of a frame, among them an edge web in which there is provided at least one stamped, milled or machined cavity, which is larger than a flat transponder, the transponder being arranged and retained in this cavity by means of a plastic and/or adhesive mass.

It should be taken into account that by their very function, formwork panels often have segments with cement on parts of their surface. The simple solution of somehow fixing an RFID tag to one of the outer surfaces of one of the profiles of a panel frame can lead to reading problems. It is known that iron, as well as some alloys used in the profiles of the panels, create a shielding effect that prevents RFID tags from being read properly, so the tags must be arranged on the outer surface of a profile of the panel or very close to it. Moreover, although covering RFID tags with a thin layer of cement does not usually prevent their reading, when the panels arrive from the construction site, they usually have concrete layers of about 2 to 5 mm thick on top, and it is necessary to clean the panel before storing it. Panel cleaning involves sandpaper, hammers, levers and pistols. Sandpaper can obviously cause the deterioration of the RFID tags if they are arranged on the surface of the panel, while pistols, hammers and levers, though not expected to have a direct impact on the RIFD tags, can cause them to be affected by the vibrations they generate, influencing their performance and fixing to the panel.

Patent document ES2681031 T3 describes a transportable device, which can be a formwork panel, with a transponder that is arranged in a cavity made of metal, having the particularity that the bottom of the cavity is provided with a groove and in which the transponder comprises a chip which is arranged between two antennas. The groove is an elongated opening at the bottom of the cavity and passes through said bottom. It is indicated that the transponder can provide information for reading without the transponder having to have its own power source to that end, and that it has been verified that the read-out range of the transponder is increased as a result the arrangement of said groove. Moreover, the arrangement of the transponder in a cavity protects the transponder against damage and it is said that it is possible, in a technically simple manner, to install the transponder in the device in a loss-proof and protected manner. It is indicated that the entire metal corner regions of the device are provided in each case with one or more transponders arranged in each case in metal cavities with groove and that the transponder is fixed in the cavity by gluing and/or is embedded in a mass of synthetic material. The surface delimiting the cavity protrudes with respect to the surface of the mass of synthetic material and/or the surface of the transponder or is flush with the surface of the mass of synthetic material.

Although this solution seems feasible for newly manufactured formwork panels, for already existing panels in which an RFID transponder is to be incorporated, it seems more complicated to put into practice in pre-existing formwork panels, because there is a need to access the bottom of the metal cavity and make the groove, and then insert the transponder therein and adhere it to the bottom or apply the synthetic material so that it is fixed and does not go missing.

One objective of the present invention is to provide a solution to the entire stock of construction elements so that they can be provided with a transponder of an RFID system so that they can benefit from the advantages that it entails, without having, to that end, to perform complicated operations or disassemble profiles of the element to make grooves on sides that are otherwise not accessible or to house and embed in a cavity the transponder with a filler material.

Another objective of the present invention is to determine or create in the construction element a location for the transponder which will ensure the long-lasting fixing of the transponder to the construction element, allow a reliable remote reading of the data without problems, without being affected by shielding effects of the metal of the profiles of the element, and without the integrity of the transponder being affected by the cleaning operations to which the construction element may be subjected after use on site.

Another objective of the present invention is to be able to meet the above objectives with standard RFID transponders, which are readily found on the market, and the assembly of which in the formwork elements involves operations and tools common in the construction sector, in order to be able to offer construction elements equipped with RFID technology at a reasonable cost.

### Description of the invention

To respond to the needs indicated above, there is disclosed an encapsulation comprising an oblong body formed by two flat end parts, provided with respective through fixing holes, and by a flat central part, and a transponder arranged inside the oblong body.

The encapsulation of the invention is characterized in that the central part has a thickness greater than the thickness of the end parts and whereby the central part has a flat protruding surface protruding with respect to the end parts, and in that gripping means in the form of an appendage extending beyond the protruding surface are arranged in the central part.

The transponder which is part of the encapsulation comprises a chip and at least one antenna.

According to another feature of the invention, the gripping means in the form of an appendage is a flat appendage extending in a direction perpendicular to the protruding surface of the central part. Other forms of the appendage, such as a filiform appendage or an appendage in the form of a handle, is not ruled out.

According to another feature of the encapsulation of the invention, the gripping means in the form of an appendage is attached to the central part through a constriction the thickness of which is at least half the thickness of the appendage.

According to another feature of the encapsulation of the invention, the attachment between the gripping means in the form of an appendage and the protruding surface can be broken by manually pulling the appendage with respect to the central part with two fingers.

According to another feature of the encapsulation of the invention, the encapsulation comprises two metal bushings, each arranged in a respective through fixing hole.

The encapsulation of the invention is made primarily of technical plastic, preferably thermoplastic, such as acrylonitrile butadiene styrene, known by its abbreviations ABS. Alternatively, it can be made of polypropylene.

According to a second aspect of the invention, there is disclosed a construction element comprising at least one hollow profile with at least one outer side the outer face of which is oriented towards the outside of the construction element and the inner face of which is oriented towards the cavity of the hollow profile.

The construction element according to the invention is characterized by comprising at least one encapsulation such as the one described above according to the first aspect of the invention, wherein said at least one encapsulation is housed in the cavity of the hollow profile, wherein the outer side of the hollow profile has at least one oblong opening with a length smaller than the length of the encapsulation and equal to or greater than the length of the flat protruding surface of the encapsulation, and with a width equal to or greater than the width of the protruding surface, and wherein the end parts of the encapsulation are attached by fixing means to respective segments of the inner face of the hollow profile which are located adjacent to the longitudinal edges of the oblong opening.

According to an optional feature of the construction element object of the invention, the difference between the thickness of the central part and the thickness of the end parts of the encapsulation is smaller than the thickness of the outer side of the hollow profile, and the protruding surface of the encapsulation is arranged inside the oblong opening, at a level located between the outer face and the inner face of the outer side of the hollow profile. Preferably, the protruding surface is between 1 and 1.5 mm below the outer face of the hollow profile, which is sufficiently concealed or recessed so that the construction element cleaning operations do not damage the encapsulation, but sufficiently accessible from the outside to ensure a good interaction between the transponder and the reader of the RFID system.

According to a preferred feature of the construction element object of the invention, the fixing means are rivets or screws the rods of which respectively go through the through fixing holes of the end parts of the encapsulation and the heads of which are seated in respective perforations provided in segments of the outer side of the hollow profile which are located adjacent to the longitudinal edges of the oblong opening.

According to another embodiment of the construction element object of the invention, the construction element comprises two encapsulations according to the invention, housed in the cavity of the hollow profile, in which the outer side of the hollow profile of the construction element has two oblong openings, each with a length smaller than the length of a respective encapsulation and equal to or greater than the length of the flat protruding surface of the respective encapsulation, and with a width equal to or greater than the width of the protruding surface of the respective encapsulation. In this embodiment, the end parts of each encapsulation are attached by respective fixing means to respective segments of the inner face of the hollow profile which are located adjacent to the longitudinal edges of the respective oblong openings.

According to a preferred embodiment of the construction element object of the invention, said element is a formwork panel the perimeter frame of which comprises the hollow profile in the cavity of which the at least one encapsulation is housed.

According to another preferred embodiment of the construction element object of the invention, said element is a prop comprising a cylindrical hollow profile with a cylindrical surface except for a segment with a flat stamping that constitutes the outer side, provided with a flat outer face and an inner face, having the at least one oblong opening, the at least one encapsulation being housed in the cavity of the segment with the flat stamping of the cylindrical hollow profile.

Preferably, the difference between the length of the opening and the length of the protruding surface is very small, and also with respect to the widths thereof, since said measurement difference is that necessary for the protruding surface to be introduced with certain ease in the opening, so there must be a small clearance. Therefore, the difference between the lengths is equal to or less than 1.5 mm, preferably equal to or less than 1 mm, and the difference between the width of the opening and the width of the protruding surface is also equal to or less than 1.5 mm, preferably equal to or less than 1 mm.

For example, according to an embodiment of the encapsulation, the protruding surface has a rectangular shape with a length of 55 mm and a width of 25 mm. According to this encapsulation, a preferred embodiment of the construction element contemplates that the opening is rectangular with a length of 56 mm and a width of 26 mm.

According to a third aspect of the invention, there is disclosed a method for assembling an encapsulation according to the first aspect of the invention in a construction element comprising at least one hollow profile with at least one outer side the outer face of which is oriented towards the outside of the construction element and the inner face of which is oriented towards the cavity of the hollow profile.

The method for assembling object of the invention is characterized in that it comprises the steps of:
a) making on the outer side of the hollow profile of the construction element at least one oblong opening with a length smaller than the length of the encapsulation and equal to or greater than the length of the flat protruding surface of the encapsulation, and with a width equal to or greater than the width of the protruding surface, and making two perforations in segments of the outer side of the hollow profile which are located adjacent to the longitudinal edges of the oblong opening, with the perforations configuring respective through holes having a diameter and a separation with respect to one another that are suitable to be superimposed with the through holes of the end parts of the encapsulation,
b) gripping the encapsulation by the appendage, moving it closer to the opening, and tilting it so as to cause the oblong body of the encapsulation to go through the opening and to be located inside the cavity of the hollow profile,
c) moving the encapsulation by gripping it by the appendage and locating it inside the cavity such that its two through holes are superimposed with the perforations of the outer side and such that the protruding surface of the encapsulation occupies part of the opening, and
d) fixing the encapsulation to the hollow profile by means of placing the fixing means in the through holes and in the perforations superimposed with same.

According to a preferred feature of the method object of the invention, after step d), a step e) consisting of breaking the attachment between the appendage and the central part of the encapsulation is carried out.

Preferably, step e) is performed by pulling the appendage with fingers in an outward direction with respect to the cavity of the hollow profile in the case where the appendage of the encapsulation is attached to central part through a constriction the thickness of which is at least half the thickness of the appendage. However, the attachment between the appendage and the central part of the encapsulation can break on its own, without needing anyone to pull the appendage, as a result of the actual activity of the construction elements. When formwork panels are stacked one on top of another, for example, the appendage will be bent and end up breaking due to the movements between the panels during handling and storage.

According to a preferred feature of the method object of the invention, step d) consists of placing rivets or screws as fixing means the rods of which respectively go through the through fixing holes of the end parts of the encapsulation and the heads of which are seated in the respective perforations provided in the segments of the outer side of the hollow profile which are located adjacent to the longitudinal edges of the oblong opening.

Preferably, in step a), the opening is made with dimensions such that the difference between the length of the opening and the length of the protruding surface is equal to or less than 1.5 mm, preferably equal to or less than 1 mm, and the difference between the width of the opening and the width of the protruding surface is equal to or less than 1.5 mm, preferably equal to or less than 1 mm.

### Brief description of the drawings

To complement the description that is being made and in order to facilitate the understanding of the features of the encapsulation and the construction element which are objects of the invention, as well as the method for assembling the encapsulation in the construction element, a set of drawings is attached to the present specification in which the following is depicted in an illustrative and nonlimiting manner:
Figure 1 is a perspective view of the encapsulation according to a preferred embodiment of the invention,
Figure 2 is a plan view of the encapsulation of Figure 1,
Figure 3 is a section view of the encapsulation of Figure 2 according to a cross-section going through a through fixing hole;
Figure 4 is an elevational view of the encapsulation of Figure 1,
Figure 5 is a partial plan view of a segment of an outer side of a construction element according to the invention,
Figure 6 is a perspective view of a first embodiment of a construction element according to the invention, consisting of a formwork panel,
Figure 7 is a detailed view of the upper part of the formwork panel of Figure 6, showing an upper outer side of the perimeter frame of the panel in which the encapsulation of Figure 1 is arranged,
Figure 8 is a detailed section view of a segment of the outer side of the formwork panel shown in Figure 7 according to a vertical plane of section that goes through the encapsulation longitudinally,
Figure 9 is a detailed view of the fixing means in the form of a rivet fixing the left end part of the encapsulation, with the adjacent part of the oblong opening of the outer side of the panel of Figure 8 also being shown,
Figures 10 to 12 are different embodiments of the outer sides of formwork panels according to the invention, shown in section according to a cross-section;
Figure 13 is a partial elevational view of a second embodiment of a construction element according to the invention, consisting of a prop comprising a cylindrical hollow profile with a cylindrical surface except for a segment with a flat stamping,
Figures 14 and 15 are section views according to planes of section A-A and B-B, respectively, of Figure 13, and
Figures 16 to 19 are schematic views of different steps of the method for assembling an encapsulation such as that of Figure 1 on an outer side of a construction element such as that of Figure 8, according to the invention.

### Detailed description of the invention

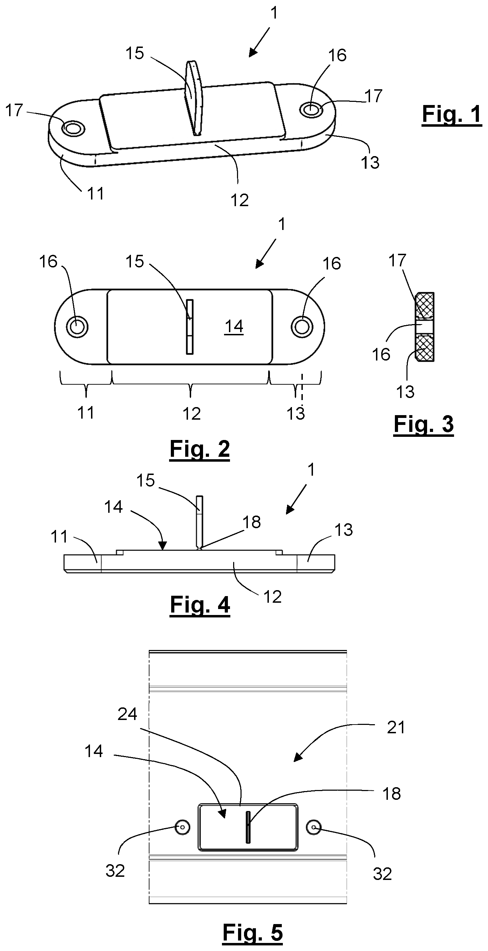

Figures 1 to 4 show different views of an encapsulation 1 comprising an oblong body formed by two flat end parts 11 and 13, provided with respective through fixing holes 16, and by a flat central part 12. Furthermore, although not visible, the encapsulation 1 comprises a transponder arranged inside the oblong body.

It can be seen that the central part 12 has a thickness greater than the thickness of the end parts 11 and 13 and whereby the central part 12 has a flat protruding surface 14 protruding with respect to the end parts 11 and 13. Furthermore, gripping means in the form of an appendage 15 extending beyond the protruding surface 14 are arranged in the central part 12. The appendage 15 allows gripping the encapsulation 1 and handling it in order to introduce it into a construction element 2, as will be explained below.

The depicted appendage 15 is a flat appendage extending in a direction perpendicular to the protruding surface 14 and is attached to the central part through a constriction 18 (see Figure 3) the thickness of which is at least half the thickness of the appendage 15.

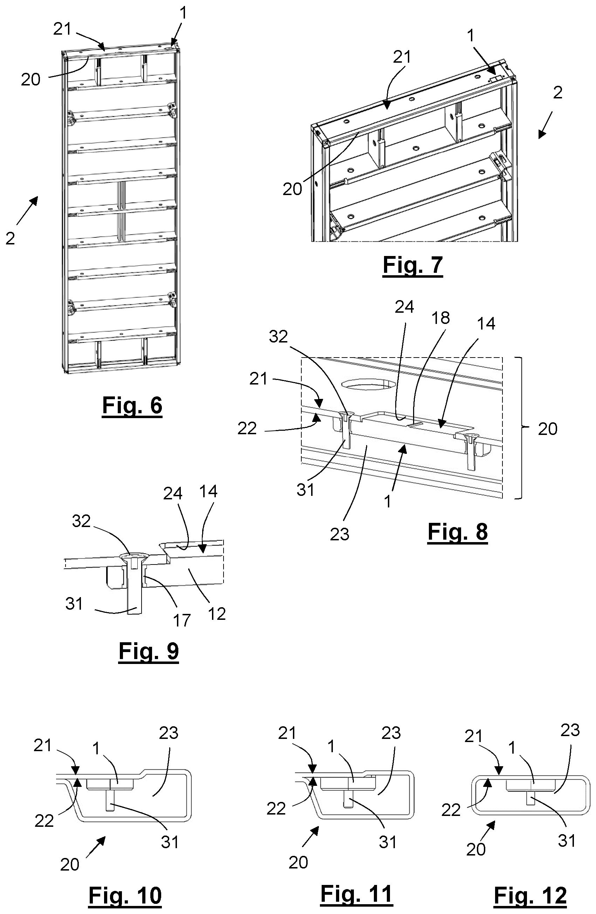

The attachment between the gripping means in the form of an appendage 15 and the protruding surface 14 can be broken by manually pulling the appendage 15 with respect to the central part 12 with two fingers. Therefore, once the encapsulation 1 has been assembled in the construction element 2, for example, in a formwork panel such as in the formwork panel of Figure 6, the appendage 15 can be readily broken with hands through the constriction 18, so that it does not interfere with the panels themselves when they are arranged one on top of another or stacked.

The encapsulation 1 also comprises two essentially cylindrical, oxidation-resistant metal bushings 17, each arranged in a respective through fixing hole 16, as can be seen particularly in Figure 3.

Figure 6 depicts a construction element 2, consisting of a formwork panel, comprising in the perimeter frame thereof at least one hollow profile with at least one outer side 20 comprising an outer face 21, an inner face 22, a front side face and a rear side face. The outer face 21 is oriented towards the outside of the construction element 2 and the inner face 22 is oriented towards the cavity 23 of the hollow profile. The construction element 2 comprises an encapsulation 1 housed in the cavity 23 of the hollow profile, in which the outer side 20 of the hollow profile has at least one oblong opening 24. In the depicted figures, the outer side 20 corresponds with the upper side of the perimeter frame of the formwork panel, and as can be seen in Figures 6 and 7, the encapsulation 1 is located in a segment close to the right corner, furthest away from the board of the formwork surface of the panel. Figures 10 to 12 show the different embodiments of the hollow profiles of the outer side 20 which the construction element 2, in the form of a formwork panel, may have.

This oblong opening 24 is also shown in Figure 5, in which it can be seen that the opening is in the form of a rectangular window with rounded corners. The length of the oblong opening 24 is smaller than the length of the encapsulation 1 and equal to or slightly greater than the length of the flat protruding surface 14 of the encapsulation 1 (see Figures 8 and 17-19), whereas the width of the oblong opening 24 is equal to or slightly greater than the width of the protruding surface 14.

According to a preferred embodiment, the protruding surface 14 of the encapsulation 1 has a rectangular shape with a length of 55 mm and a width of 25 mm, whereas the oblong opening 24 is rectangular with a length of 56 mm and a width of 26 mm. Therefore, the protruding surface 14 is only separated from the edges of the oblong opening 24 by 0.5 cm on each side.

Another feature to be highlighted is that the difference between the thickness of the central part 12 and the thickness of the end parts 11 and 13 of the encapsulation 1 is smaller than the thickness of the outer side 20 of the hollow profile. Therefore, the protruding surface 14 of the encapsulation 1 is arranged inside the oblong opening 24, at a level located between the outer face 21 and the inner face 22 of the outer side 20 of the hollow profile. This can be clearly seen in Figures 8, 9 and 19, in which it can be seen that the protruding surface 14 is slightly below the outer face 21 but slightly above the inner face 22, which simultaneously facilitates the reading of the transponder and the integrity of the encapsulation 1 during operations for cleaning the construction element 2.

The transponder of the encapsulation 1 provided in the formwork panel complies with the most demanding scenario in terms of reading distance requirements, which corresponds to an inventory situation. When carrying out the inventory, the maximum reading distance of the RFID terminal or reader antenna with the transponder of the formwork panel, the position of which is in direct view since the protruding surface 14 of the encapsulation 1 is visible, is about 2.5 to 3 m with an angle of 80°. Another also demanding scenario is the reception of panels from a construction site, since the protruding surface 14 or part thereof may be covered by concrete, although in said case the reading distance is very short.

The end parts 11 and 13 of the encapsulation 1 are attached by fixing means 3 to respective segments of the inner face 22 of the hollow profile which are located adjacent to the longitudinal edges of the oblong opening 24. Preferably, the fixing means 3 are rivets or screws the rods 31 of which go through, respectively, the through fixing holes 16 of the end parts 11 and 13 of the encapsulation 1, and the heads 32 of which are seated in respective perforations provided in segments of the outer side 20 of the hollow profile which are located adjacent to the longitudinal edges of the oblong opening 24. The two metal bushings 17 of the encapsulation 1 prevent the material of the encapsulation 1 from breaking during riveting or screwing.

It should be mentioned that although not depicted in the figures, the construction element 2 can have two encapsulations 1 arranged in respective oblong openings 24 made on the outer side 20 of the hollow profile, for example, in an opening 24 made in the upper left corner and in an opening 24 made in the lower right corner of the outer side 20.

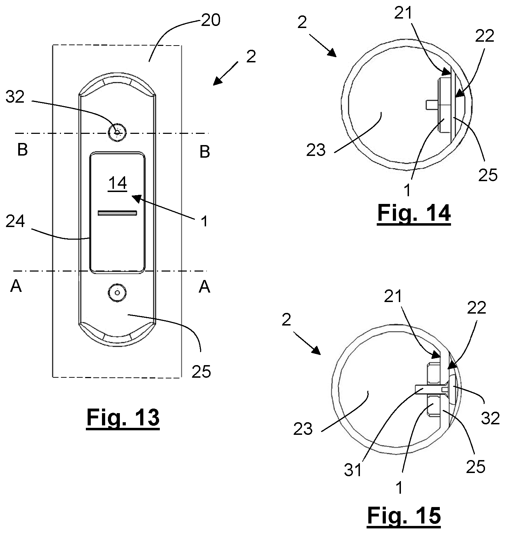

Figures 13 to 15 depict a construction element 2 consisting of a prop. The prop comprises a cylindrical hollow profile with a cylindrical surface except for a segment with a flat stamping 25 that constitutes the outer side 20, provided with a flat outer face 21 and an inner face 22, having an oblong opening 24, with the encapsulation 1 being housed in the cavity 23 of the segment with the flat stamping 25 of the cylindrical hollow profile.

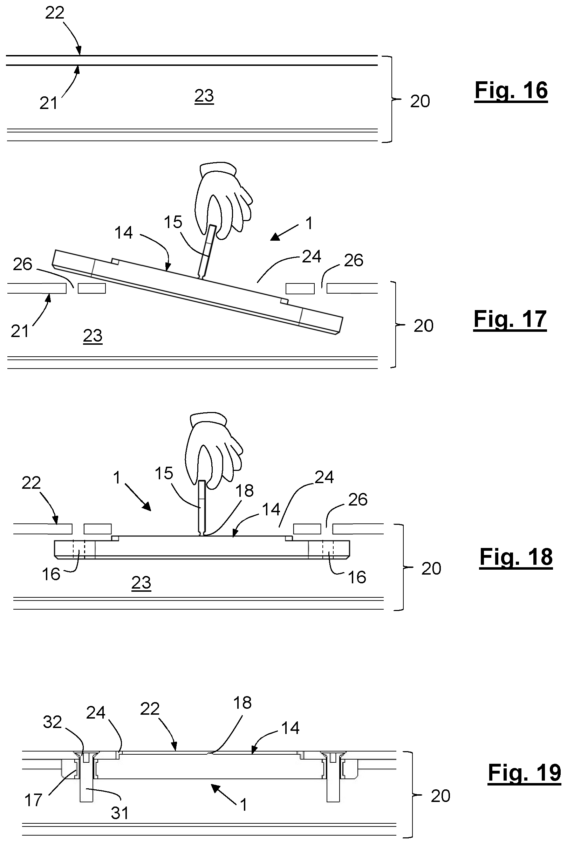

Finally, a method for assembling an encapsulation 1 in a construction element 2 is described below. To that end, reference is made to schematic Figures 16 to 19 which depict some of the steps of the method. The construction element 2 is that which comprises at least one hollow profile with at least one outer side 20 the outer face 21 of which is oriented towards the outside of the construction element 2 and the inner face 22 of which is oriented towards the cavity 23 of the hollow profile. A segment of the starting outer side 20 is shown in Figure 16. The method comprises the following steps.

A step a) consists of making on the outer side 20 of the hollow profile of the construction element 2 at least one oblong opening 24 with a length smaller than the length of the encapsulation 1 and equal to or greater than the length of the flat protruding surface 14 of the encapsulation 1, and with a width equal to or greater than the width of the protruding surface 14, and of making two perforations 26 in segments of the outer side 20 of the hollow profile which are located adjacent to the longitudinal edges of the oblong opening 24, with the perforations 26 configuring respective through holes having a diameter and a separation with respect to one another that are suitable to be superimposed with the through holes 16 of the end parts 11 and 13 of the encapsulation 1. The opening 24 and the two perforations 26 are shown on the outer side 20 depicted in Figure 17.

The next step, step b), consists of gripping the encapsulation 1 by the appendage 15 with fingers, moving it closer to the opening 24, and tilting it to cause the oblong body of the encapsulation 1 to go through the opening 24 and to be located inside the cavity 23 of the hollow profile. This is shown in Figure 17.

The next step, step c), consists of moving the encapsulation 1 by gripping it by the appendage 15 and locating it inside the cavity 23 such that its two through holes 16 are superimposed with the perforations 26 of the outer side 20 and such that the protruding surface 14 of the encapsulation 1 occupies part of the opening 24. Figure 18 shows how the encapsulation 1 would be positioned.

The next step, step d), consists of fixing the encapsulation 1 to the hollow profile by means of placing the fixing means 3 in the through holes 16 and in the perforations 26 superimposed with same. In Figure 19, the fixing means 3 are rivets the rods 31 of which have been placed going through the through fixing holes 16 of the end parts 11 and 13 of the encapsulation 1 and the heads 32 of which have been arranged seated in the respective perforations 26 provided in the segments of the outer side 20 of the hollow profile which are located adjacent to the longitudinal edges of the oblong opening 24.

Finally, the attachment between the appendage 15 and the central part 12 of the encapsulation 1 is broken. This step is performed by pulling the appendage 15 with fingers in an outward direction with respect to the cavity 23 of the hollow profile when the appendage 15 is attached to the central part 12 through the constriction 18 the thickness of which is at least half the thickness of the appendage 15. Therefore, no tool is required for cutting the appendage 15 such that no part of the encapsulation protrudes externally from the hollow profile.

However, the attachment between the appendage 15 and the central part 12 of the encapsulation 1 can break on its own, without requiring anyone to pull the appendage 15, as a result of the actual activity of the construction elements 2. For example, when the formwork panels are stacked one on top of another, the appendage 15 will eventually bend and break due to movements between panels during handling and storage.

## Claims

1. An encapsulation (1) comprising an oblong body formed by two flat end parts (11, 13), provided with respective through fixing holes (16), and by a flat central part (12), and a transponder arranged inside the oblong body, **characterized in that** the central part (12) has a thickness greater than the thickness of the end parts (11, 13) and whereby the central part (12) has a flat protruding surface (14) protruding with respect to the end parts (11, 13), and **in that** gripping means in the form of an appendage (15) extending beyond the protruding surface (14) are arranged in the central part (12).

2. The encapsulation (1) according to claim 1, **characterized in that** the gripping means in the form of an appendage (15) is a flat appendage extending in a direction perpendicular to the protruding surface (14) of the central part (12).

3. The encapsulation (1) according to any one of the preceding claims, **characterized in that** the gripping means in the form of an appendage (15) is attached to central part (12) through a constriction (18) the thickness of which is at least half the thickness of the appendage (15).

4. The encapsulation (1) according to any one of the preceding claims, **characterized in that** the attachment between the gripping means in the form of an appendage (15) and the protruding surface (14) can be broken by manually pulling the appendage (15) with respect to the central part (12) with two fingers.

5. The encapsulation (1) according to any one of the preceding claims, **characterized in that** it comprises two metal bushings (17), each arranged in a respective through fixing hole (16).

6. The encapsulation (1) according to any one of the preceding claims, **characterized in that** the transponder comprises a chip and at least one antenna.

7. A construction element (2) comprising at least one hollow profile with at least one outer side (20) the outer face (21) of which is oriented towards the outside of the construction element (2) and the inner face (22) of which is oriented towards the cavity (23) of the hollow profile, **characterized in that** the construction element (2) comprises at least one encapsulation (1) according to any one of claims 1 to 6 housed in the cavity (23) of the hollow profile, wherein the outer side (20) of the hollow profile has at least one oblong opening (24) with a length smaller than the length of the encapsulation (1) and equal to or greater than the length of the flat protruding surface (14) of the encapsulation (1), and with a width equal to or greater than the width of the protruding surface (14), wherein the end parts (11, 13) of the encapsulation (1) are attached by fixing means (3) to respective segments of the inner face (22) of the hollow profile which are located adjacent to the longitudinal edges of the oblong opening (24).

8. The construction element (2) according to claim 7, **characterized in that** the difference between the thickness of the central part (12) and the thickness of the end parts (11, 13) of the encapsulation (1) is smaller than the thickness of the outer side (20) of the hollow profile and **in that** the protruding surface (14) of the encapsulation (1) is arranged inside the oblong opening (24), at a level located between the outer face (21) and the inner face (22) of the outer side (20) of the hollow profile.

9. The construction element (2) according to claim 7 or 8, **characterized in that** the fixing means (3) are rivets or screws the rods (31) of which go through, respectively, the through fixing holes (16) of the end parts (11, 13) of the encapsulation (1) and the heads (32) of which are seated in respective perforations provided in segments of the outer side (20) of the hollow profile which are located adjacent to the longitudinal edges of the oblong opening (24).

10. The construction element (2) according to any one of claims 7 to 9, **characterized in that** it comprises two encapsulations (1) according to any one of claims 1 to 6 housed in the cavity (23) of the hollow profile, wherein the outer side (20) of the hollow profile has two oblong openings (24) each with a length smaller than the length of a respective encapsulation (1) and equal to or greater than the length of the flat protruding surface (14) of the respective encapsulation (1), and with a width equal to or greater than the width of the protruding surface (14) of the respective encapsulation (1), wherein the end parts (11, 13) of each encapsulation (1) are attached by respective fixing means (3) to respective segments of the inner face (22) of the hollow profile which are located adjacent to the longitudinal edges of the respective oblong openings (24).

11. The construction element (2) according to any one of claims 7 to 10, **characterized in that** it is a formwork panel the perimeter frame of which comprises the hollow profile in the cavity (23) of which the at least one encapsulation (1) is housed.

12. The construction element (2) according to any one of claims 7 to 10, **characterized in that** it is a prop comprising a cylindrical hollow profile with a cylindrical surface except for a segment with a flat stamping (25) that constitutes the outer side (20), provided with a flat outer face (21) and an inner face (22), having the at least one oblong opening (24), the at least one encapsulation (1) being housed in the cavity (23) of the segment with the flat stamping of the cylindrical hollow profile.

13. The construction element (2) according to any one of claims 7 to 12, **characterized in that** the difference between the length of the opening (24) and the length of the protruding surface (14) is equal to or less than 1.5 mm, preferably equal to or less than 1 mm, and **in that** the difference between the width of the opening (24) and the width of the protruding surface (14) is equal to or less than 1.5 mm, preferably equal to or less than 1 mm.

14. A method for assembling an encapsulation (1) according to any one of claims 1 to 6 in a construction element (2) comprising at least one hollow profile with at least one outer side (20) the outer face (21) of which is oriented towards the outside of the construction element (2) and the inner face (22) of which is oriented towards the cavity (23) of the hollow profile, **characterized in that** it comprises the steps of:
a) making on the outer side (20) of the hollow profile of the construction element (2) at least one oblong opening (24) with a length smaller than the length of the encapsulation (1) and equal to or greater than the length of the flat protruding surface (14) of the encapsulation (1), and with a width equal to or greater than the width of the protruding surface (14), and making two perforations in segments of the outer side (20) of the hollow profile which are located adjacent to the longitudinal edges of the oblong opening (24), with the perforations configuring respective through holes having a diameter and a separation with respect to one another that are suitable to be superimposed with the through holes (16) of the end parts (11, 13) of the encapsulation (1),
b) gripping the encapsulation (1) by the appendage (15), moving it closer to the opening (24), and tilting it so as to cause the oblong body of the encapsulation (1) to go through the opening (24) and to be located inside the cavity of the hollow profile,
c) moving the encapsulation (1) by gripping it by the appendage (15) and locating it inside the cavity (23) such that its two through holes (16) are superimposed with the perforations of the outer side (20) and such that the protruding surface (14) of the encapsulation (1) occupies part of the opening (24), and
d) fixing the encapsulation (1) to the hollow profile by means of placing the fixing means (3) in the through holes (16) and in the perforations superimposed with same.

15. The method according to claim 14, **characterized in that**, after step d), a step e) consisting of breaking the attachment between the appendage and the central part of the encapsulation is carried out.

16. The method according to claim 15, **characterized in that** step e) is performed by pulling the appendage (15) with fingers in an outward direction with respect to the cavity (23) of the hollow profile in the case where the encapsulation (1) is according to claim 3.

17. The method according to any one of claims 14 to 16, **characterized in that** step d) consists of placing rivets or screws as fixing means (3) the rods (31) of which respectively go through the through fixing holes (16) of the end parts (11, 13) of the encapsulation (1) and the heads (32) of which are seated in the respective perforations provided in the segments of the outer side (20) of the hollow profile which are located adjacent to the longitudinal edges of the oblong opening (24).

18. The method according to any one of claims 14 to 17, **characterized in that**, in step a), the opening (24) is made with dimensions such that the difference between the length of the opening (24) and the length of the protruding surface (14) is equal to or less than 1.5 mm, preferably equal to or less than 1 mm, and the difference between the width of the opening (24) and the width of the protruding surface (14) is equal to or less than 1.5 mm, preferably equal to or less than 1 mm.
